# EUROPEAN PATENT APPLICATION

(11) **EP 4 478 189 A1**
(43) Date of publication of application: **18.12.2024**
(21) Application number: 24179839.6
(22) Date of filing: 04.06.2024
(51) Int. Cl.: G06F 9/455, G06F 9/50

(54) **MANAGING VIRTUAL MACHINE DEPLOYMENT BASED ON SMART NIC RESOURCE AVAILABILITY**

(30) Priority: 08.06.2023 US 202318331236
(71) Applicant: VMware LLC, Palo Alto, CA 94304 (US)
(72) Inventor: Sharma, Ankur Kumar, Palo Alto, 94304 (US)
(74) Representative: Dilg, Haeusler, Schindelmann Patentanwaltsgesellschaft mbH

(57) **Abstract**

Described herein are systems, methods, and software to manage the deployment of virtual machines based on smart network interface connector (SmartNIC) resource availability. In one implementation, a management service identifies a request to deploy a virtual machine in a computing environment. The management service further identifies SmartNIC resource requirement information associated with the virtual machine and identifies resource availability information associated with SmartNICs on hosts in the computing environment. The management service also selects a host from the hosts for the virtual machine based on the SmartNIC resource requirement information and the resource availability information.

## Description

### BACKGROUND

In computing environments, virtual machines are deployed on hosts to use the physical resources of the host more efficiently. The resources include processing system resources (i.e., CPU resources), memory resources, storage resources, and networking resources. To support the virtual machines, a hypervisor is used to abstract the physical components of the hosts and provide each of the virtual machines with abstracted components for execution.

In some implementations, the hypervisor can further provide networking operations in association with the virtual machine, including routing, switching, firewall, or some other networking operation. The networking operations can be used to communicate packets between virtual machines on the same host, communicate packet between virtual machines across multiple hosts, and communicate with other computing systems. The networking operations of the hypervisor can identify addressing attributes of the packets and forward the packets based on the addressing attributes. The addressing attributes can comprise IP addresses, MAC addresses, ports, protocol, or some other addressing attribute.

In some hosts, the networking operations of the hypervisor can be offloaded to a smart network interface connector (SmartNIC). An example offloading technique is described in U.S. Patent 11,606,310, which is titled, "Flow Processing Offload using Virtual Port Identifiers" and was granted March 14, 2023, and which is fully incorporated by reference herein. The SmartNIC includes a processing system and memory that is separate from the main processing system (CPU and memory) of the host, wherein hardware of the SmartNIC can be used to provide networking processes that would otherwise take resources of the main processing system. However, because the resources of each of the SmartNICs are finite, issues can arise when the SmartNIC resources are exhausted. These issues can include poor performance or failures associated with processing the communications at the host.

### OVERVIEW

The technology disclosed herein manages virtual machine deployment in a computing environment based on smart network interface connector (SmartNIC) resource availability. In one implementation, a method includes identifying a request to deploy a virtual machine in the computing environment. The method further includes identifying SmartNIC resource requirement information associated with the virtual machine and identifying resource availability information associated with SmartNICs on hosts in the computing environment. The method also provides selecting a host from the hosts for the virtual machine based on the SmartNIC resource requirement information and the resource availability information.

In one implementation, the method can further select the host for the virtual machine based on feature sets associated with the SmartNICs at the hosts.

In one implementation, the method can further select the host based on resource availability of the main processing system at each of the hosts, wherein the main processing system can comprise different processing hardware from the SmartNIC of the host.

### BRIEF DESCRIPTION OF THE DRAWINGS

Figure 1 illustrates a computing environment to manage virtual machine deployment based on smart network interface connector (SmartNIC) resource availability according to an implementation.
Figure 2 illustrates an operation of a management service to deploy virtual machines in a computing environment based on SmartNIC resource availability according to an implementation.
Figure 3 illustrates an operational scenario of deploying a virtual machine in a computing environment based SmartNIC resource availability and feature set availability according to an implementation.
Figure 4 illustrates an operational scenario of selecting a host for a virtual machine based on SmartNIC factors according to an implementation.
Figure 5 illustrates a management service computing system to deploy virtual machines in a computing environment based on SmartNIC resource availability according to an implementation.

### DETAILED DESCRIPTION

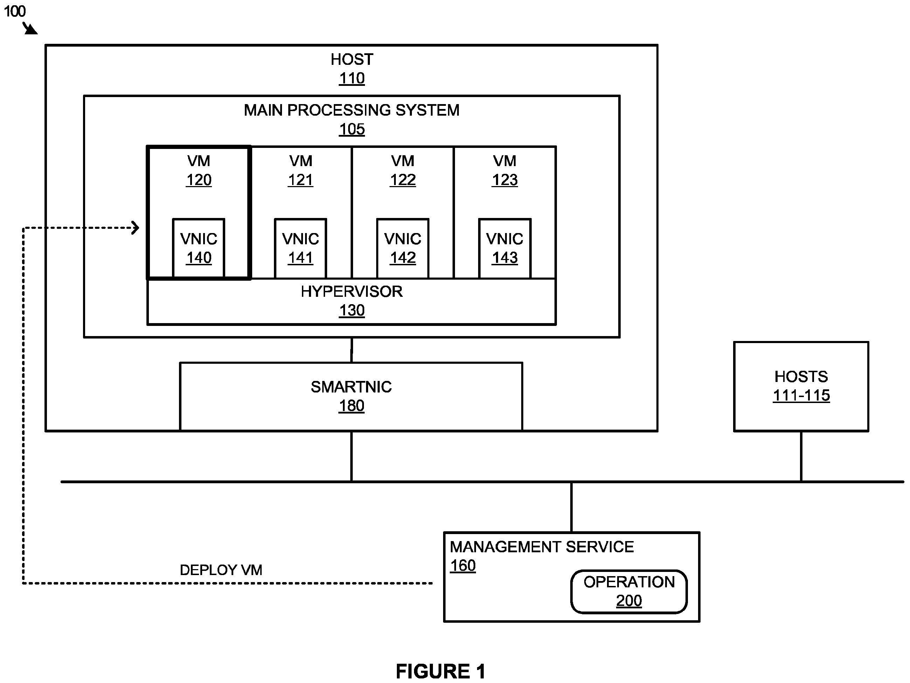

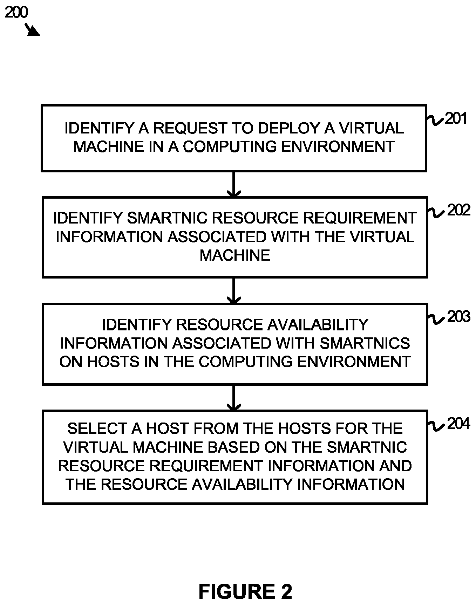

Figure 1 illustrates a computing environment 100 to manage virtual machine deployment based on smart network interface connector (SmartNIC) resource availability according to an implementation. Computing environment 100 includes hosts 110-115 and management service 160 that are coupled via a communication network. Host 110 further includes a main processing system 105 and SmartNIC 180. Main processing system 105 includes circuitry including at least one processor and memory that support hypervisor 130 and virtual machines 120-123 with virtual network interface connectors (VNICs) 140-143. Management service 160 can execute on one or more computers to provide at least operation 200 that is further described below with respect to Figure 2.

In computing environment 100, virtual machines, such as virtual machines 120-123 are deployed to use the physical resources of host 110 more efficiently. Virtual machines 120-123 can provide virtual desktop operations, front-end server operations, data processing operations, or some other operations. To support the execution of virtual machines 120-123, hypervisor 130 is provided, wherein hypervisor 130 abstracts the physical hardware of host 110 and provides the abstracted hardware to virtual machines 120-123. The abstracted hardware can include processing system resources (i.e., CPU hardware), memory resources, networking resources, storage resources, or some other physical resources. Using the example of host 110, virtual machine 120 can be provided with first abstracted resources, while virtual machine 121 is provided with second abstracted resources.

In some implementations, hypervisor 130 can further support networking operations for virtual machines 120-123 executing on host 110. The networking operations can include firewall operations, encapsulation operations, routing operations, or other types of networking operations. The networking operations can identify attributes within the packet, such as source IP address, destination IP address, ports, protocols, and the like, and forward the packets based on the addressing. The networking operations can be used to forward packets locally on the same host or can be used to communicate over physical network connections between hosts and other computing systems.

Here, to support the networking operations for virtual machines 120-123, host 110 includes SmartNIC 180 is provided. SmartNIC 180 can support networking operations that would otherwise be provided by hypervisor 130, such as firewall operations for one or more of the virtual machines. SmartNIC 180 includes hardware, including a processing system (i.e., at least one processor or other configurable logic), memory, the like, that is operatively coupled but operates separate from main processing system 105. As an example, rather than implementing a firewall operation for virtual machine 120, SmartNIC 180 can be configured to support the firewall operation. Consequently, when a packet is received at SmartNIC 180, SmartNIC 180 can provide the firewall operation without requiring resources from main processing system 105. Although demonstrated as only residing in host 110, hosts 111-115 can also include one or more SmartNICs capable of providing networking operations for the corresponding host. Furthermore, while only one SmartNIC 180 is shown instantiated in host 110, multiple SmartNICs may be provided by each host 110-115, e.g., for redundancy or increased throughput.

When a request is generated to deploy a virtual machine in computing environment 100, management service 160 can use SmartNIC resource availability information for each of the hosts. The SmartNIC resource availability information can include unused compute capacity of the SmartNIC's CPU or processor, such as a quantity of available idle time at the SmartNIC CPU, available cores on the SmartNIC, an availability percentage or ratio of the one or more cores on the SmartNIC CPU, or some other availability metric associated with the SmartNIC CPU. The SmartNIC resource availability can further include information regarding available memory capacity of the SmartNIC, e.g., in megabytes of available storage, and available network bandwidth, e.g., kin megabits per second of available bandwidth. The information can be communicated by each of the hosts to management service 160 periodically, can be communicated at the request of management service 160, or can be communicated in some other manner. Management service 160 can further consider the requirements or SmartNIC resource requirement information associated with the virtual machine. The SmartNIC resource requirement information can be determined based on the type of application provided by the virtual machine, can be provided by an administrator deploying the virtual machine, can be inferred from other similar applications (e.g., other virtual machines providing the same or similar application), based on a previous deployment of the virtual machine (e.g., execution on another host), or some other factor. From the SmartNIC resource availability information for the hosts and the SmartNIC resource requirements for the deploying virtual machine, management service 160 can select a host 110 from hosts 110-115. In some implementations, a host can be selected with resources available to support the virtual machine.

In some examples, in addition to identifying the SmartNIC resource availability information for each of the hosts, management service 160 can further obtain resource availability information associated with the main processing systems on each of the hosts. For a virtual machine to be deployed to a host, the host can be required to possess available SmartNIC resources and main processing system resources (i.e., separate CPU and memory resources). If the resources are not available, management service 160 can generate an indication that is provided to an administrator of the computing environment, can migrate the virtual machine to a different host that can supply the required resources to the virtual machine, or can provide some other operation.

Figure 2 illustrates an operation 200 of a management service to deploy virtual machines in a computing environment based on SmartNIC resource availability according to an implementation. The steps of operation 200 are identified parenthetically in the paragraphs that follow with reference to computing environment 100 of Figure 1. Although described using virtual machine 120, similar operations can be performed using any of the virtual machines depicted in computing environment 100 of Figure 1.

Operations 200 includes identifying (201) a request to deploy a virtual machine 120 in a computing environment. The request can comprise a request for a new virtual machine or a request to migrate a virtual machine from a first host to a second host. The request can be generated from an administrator, e.g., by interacting with a user interface (not shown) provided by management service 160, can be generated as a migration request to migrate a virtual machine from a first host to a second host, or can be generated in some other manner. The request can be identified simply by receiving the request. In response to the request, operation 200 further includes identifying (202) SmartNIC resource requirement information associated with virtual machine 120. The SmartNIC resource requirement information can indicate the amount of processor resources and/or memory resources required from the SmartNIC to support the virtual machine. The SmartNIC resource requirement information can be defined by an administrator associated with deploying virtual machine 120, can be identified based on a workload provided by virtual machine 120, can be identified via a prior deployment of virtual machine 120, or can be identified in some other manner. For example, virtual machine 120 can provide a database management application and resource requirements for virtual machine 120 can be estimated based on type of application.

In addition to identifying the SmartNIC resource requirements of virtual machine 120, operation 200 further provides for identifying (203) resource availability information associated with the SmartNICs on the hosts in computing environment 100. The resource availability information can be provided periodically from the hosts of computing environment 100, can be provided in response to a request from management service 160, or can be provided at some other interval. The resource availability information can comprise processor resource availability and/or memory resource availability associated with the SmartNICs at hosts 110-115. For example, host 110 may indicate a first quantity of resources available, while host 111 indicates a second quantity of resources available.

After the SmartNIC resource requirements and resource availability information are identified, operation 200 further provides for selecting (204) a host from the hosts for the virtual machine based on the SmartNIC resource requirement information and resource availability information.

In some implementations additional factors can be considered when selecting a host for the virtual machine. In at least one example, a factor can include resource availability of the resources associated with the main processing system (e.g., CPU resource availability and memory availability). Each of the hosts can provide resource availability information that can be compared to the requirements for the virtual machine to determine whether the host would be suitable for the virtual machine. If multiple hosts include suitable resources both in the main processing systems and the SmartNICs, then any of the hosts can be selected to support the virtual machine. Management service 140 can select the host with the most available resources in the main processing system and the SmartNIC of the host, can select the host randomly from the set of hosts with suitable resources, or can select a host in some other manner.

In another example of a factor for selecting the host for the virtual machine, the management service can identify vendor information associated with each of the SmartNICs and features associated with each of the SmartNICs. Thus, while a first host may include a first SmartNIC from a first vendor that supports a first set of features (e.g., firewall features, encapsulation features, etc.), a second SmartNIC from a second vendor may not support all the same features. As part of the SmartNIC resource requirement information, the virtual machine can be associated with or indicate a preference of one or more vendors over one or more other vendors, can indicate required features for the virtual machine, or can provide some other information. Thus, hosts with the desired features or vendors for the SmartNIC can be preferred over hosts that lack the features or vendors for the virtual machines. Although demonstrated as using the main processing resource availability and feature sets separately in selecting a host for a virtual machine, any number of factors can be used to select the host for the virtual machine.

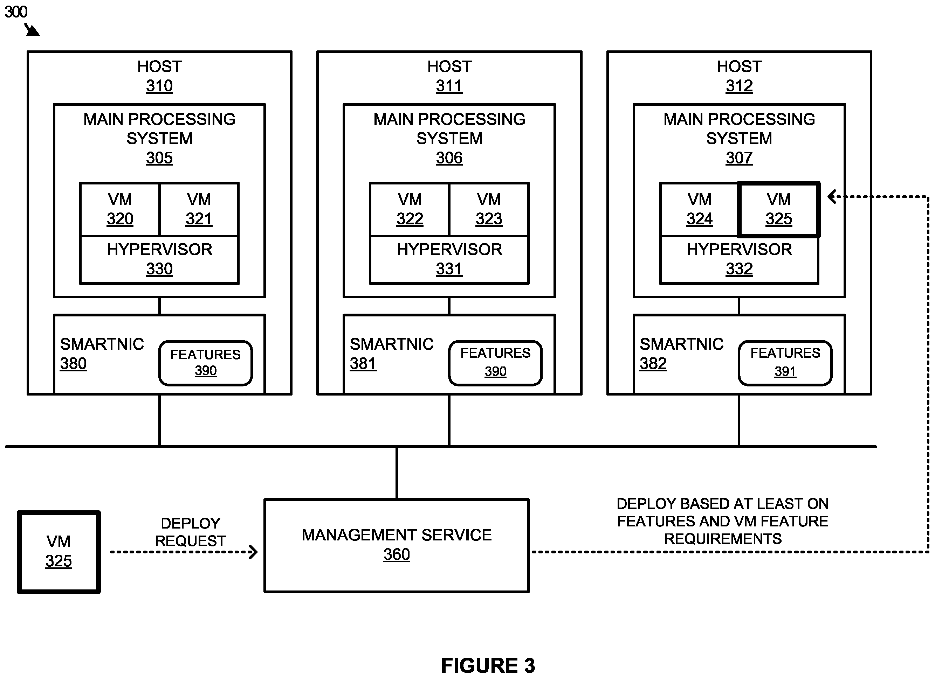

Figure 3 illustrates an operational scenario 300 of deploying a virtual machine in a computing environment based SmartNIC resource availability and feature set availability according to an implementation. Operational scenario 300 includes hosts 310-312 and management service 360. Operational scenario 300 further includes main processing systems 305-307 that support the execution of hypervisors 330-332 and virtual machines 320-325, and SmartNICs 380-382 that provide features 390 or 391. Management service 360 can execute across one or more computers to manage the deployment of virtual machines across hosts 310-312. Although demonstrated separately, management service 360 can be implemented wholly or partially on a host in some examples.

In operational scenario 300, management service 360 identifies a request to deploy virtual machine 325 in a computing environment. The request can comprise an initial request for the virtual machine or a request to migrate the virtual from a first host to a second host. In response to the request, management service 360 identifies the SmartNIC requirements associated with virtual machine 325 and selects a host from hosts 310-312 based on the requirements for the virtual machine. The requirements can indicate a quantity of resources (e.g., SmartNIC processing resources or SmartNIC memory resources), can indicate the features required or preferred by the virtual machine, or can provide some other information. From the resource requirements of the virtual machine, management service 360 can identify a host in hosts 310-312 that provides adequate resources for the virtual machine. Here, virtual machine 325 is associated with features 391 that are provided in association with SmartNIC 382. The features can comprise hardware for implementing firewalls, features for encapsulation, prioritization operations, or some other operation. Accordingly, management service 360 selects host 312 for virtual machine 325 and deploys virtual machine 325 at host 312. The deployment can include attaching any volumes associated with the virtual machine, configuring hypervisor 332, configuring SmartNIC 382, or providing some other operation to support virtual machine 325 at host 312.

In some implementations, management service 360 can consider other factors in determining the destination host for virtual machine 325. The factors can include the quantity of available resources at each of the SmartNICs, the available resources at main processing systems 305-307, or some other factor. As an example, although virtual machine 325 may request a subset of the features associated with features 391, host 312 may be incapable of supporting virtual machine 325 based on resource availability associated with SmartNIC 382 or main processing system 307. Management service 360 may then select an alternative host from hosts 310-311 to support the virtual machine. The alternative host can be selected based on a score generated from any combination of the aforementioned factors.

In some implementations, the SmartNIC resource availability can be used as a secondary operation to select a host for the virtual machine. Specifically, a first operation at management service 360 can determine whether each of the hosts comprises the requisite processing and memory resources in the main processing system on each of the hosts. Once a subset of hosts is identified with the requisite resources of the main processing system, management service 360 can consider the SmartNIC requirements associated with the virtual machine. Management service 360 can select the host from the subset that best satisfies the requirements of the virtual machine. Alternatively, if a single host includes the resources on the main processing system, then management service 360 can select the single host without considering the SmartNIC requirements for the virtual machine.

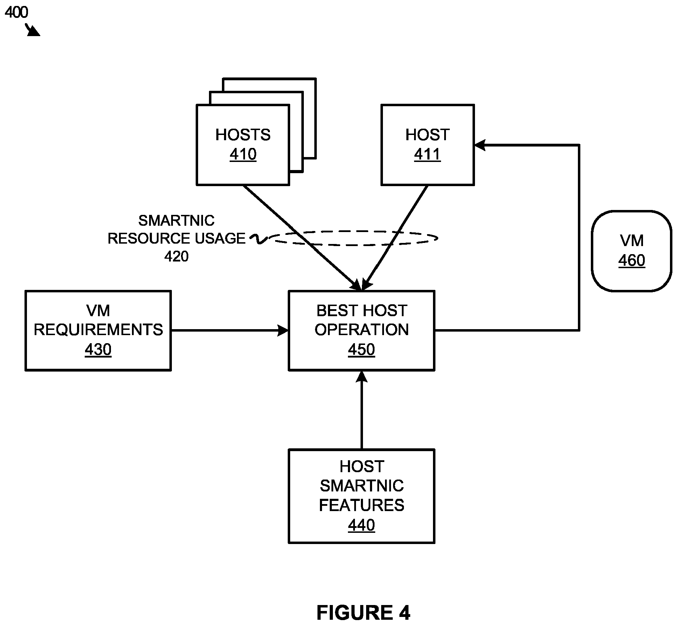

Figure 4 illustrates an operational scenario 400 of selecting a host for a virtual machine based on SmartNIC factors according to an implementation. Operational scenario 400 includes hosts 410-411, virtual machine requirements 430, host SmartNIC features 440, best host operation 450, and virtual machine 460. Hosts 410-411 provide SmartNIC resource usage 420 to best host operation 450. Best host operation 450 is an example operation that can be performed by a management service, such as management service 160 of Figure 1.

In operational scenario 400, and in response to a request to deploy virtual machine 460 in a computing environment, best host operation 450 identifies virtual machine requirements 430 for virtual machine 430. The virtual machine requirements comprise at least SmartNIC resource requirement information and can further include main processing system requirements for the virtual machine. In addition to the virtual machine requirements, best host operation 450 can obtain SmartNIC resource usage 420 from hosts 410-411 that indicates the available resources at the SmartNICs. The available resources can include processor resources available in the corresponding SmartNIC, memory resources available in the corresponding SmartNIC, or some other resource availability associated with the SmartNIC. The SmartNIC resource usage 420 can be provided periodically or at the request of the management service. In addition to the resource availability, best host operation 450 obtains host SmartNIC features 440, wherein the features can correspond to a particular vendor, can correspond to device type, or can be identified via some other means. Different SmartNICs can comprise hardware to manage firewalls for the virtual machines, to provide prioritization for different packet types, or provide some other different functionality.

Once virtual machine requirements 430, SmartNIC resource usage 420, and host SmartNIC features 440 are obtained, best host operation 450 then selects a host 411 to support virtual machine 460 based on virtual machine requirements 430, SmartNIC resource usage 420, and host SmartNIC features 440. In some examples, best host operation 450 can score each of the hosts based on the ability to support the virtual machine requirements 430. The host can then be selected based on the scores, such that the host with the best score is used for the virtual machine.

Although not demonstrated in operational scenario 400, best host operation 450 can further consider the main processing resources available at each host of hosts 410-411. The main processing resources can comprise processing resources (e.g., percentage, type, etc.), memory resources (size, speed, latency, etc.), or some resource associated with the main processing system at each host of hosts 410-411. The main processing system for a host will comprise first hardware (e.g., at least one processor and memory), while the SmartNIC or SmartNICs for a host will include different hardware. Thus, in addition to determining whether a host can support the requirements of the virtual machine on the SmartNIC, best host operation 450 can also determine whether the host can support the main processing system requirements of the virtual machine.

In at least one implementation, best host operation 450 can determine that a subset of hosts can support the execution of the virtual machine. In these examples, a host can be selected randomly to support the new virtual machine, a host can be selected with the most available resources, or a host can be selected in some other manner from the subset of possible hosts. In one example, best host operation 450 can first identify a set of hosts that can provide the requisite main processing resources to the virtual machine. Once the set is identified, best host operation 450 can consider the resources available in association with the SmartNICs for the set of hosts to select a host for deploying the virtual machine.

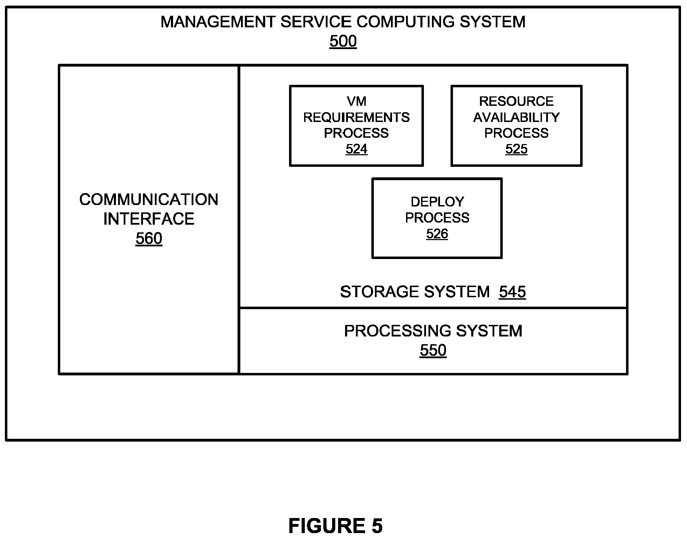

Figure 5 illustrates a management service computing system 500 to deploy virtual machines in a computing environment based on SmartNIC resource availability according to an implementation. Management service computing system 500 is representative of any computing system or systems with which the various operational architectures, processes, scenarios, and sequences disclosed herein for a management service can be implemented. Management service computing system 500 is an example of management service 160 of Figure 1 and management service 360 of Figure 3, although other examples may exist. Management service computing system 500 includes storage system 545, processing system 550, and communication interface 560. Processing system 550 is operatively linked to communication interface 560 and storage system 545. Communication interface 560 may be communicatively linked to storage system 545 in some implementations. Management service computing system 500 may further include other components such as a battery and enclosure that are not shown for clarity.

Communication interface 560 comprises components that communicate over communication links, such as network cards, ports, radio frequency (RF), processing circuitry and software, or some other communication devices. Communication interface 560 may be configured to communicate over metallic, wireless, or optical links. Communication interface 560 may be configured to use Time Division Multiplex (TDM), Internet Protocol (IP), Ethernet, optical networking, wireless protocols, communication signaling, or some other communication format - including combinations thereof. Communication interface 560 may be configured to communicate with other hosts and computing systems in the same data center or across multiple data centers. Communication interface 560 can be used to identify resource availability at each host in a computing environment and deploy a virtual machine to the hosts in the computing environment.

Processing system 550 comprises microprocessor (e.g., at least one processor) and other circuitry that retrieves and executes operating software from storage system 545. Storage system 545 may include volatile and nonvolatile, removable, and non-removable media implemented in any method or technology for storage of information, such as computer readable instructions, data structures, program modules, or other data. Storage system 545 may be implemented as a single storage device but may also be implemented across multiple storage devices or sub-systems. Storage system 545 may comprise additional elements, such as a controller to read operating software from the storage systems. Examples of storage media include random access memory, read only memory, magnetic disks, optical disks, and flash memory, as well as any combination or variation thereof, or any other type of storage media. In some implementations, the storage media may be a non-transitory storage media. In some instances, at least a portion of the storage media may be transitory. In no case is the storage media a propagated signal.

Processing system 550 is typically mounted on a circuit board that may also hold the storage system. The operating software of storage system 545 comprises computer programs, firmware, or some other form of machine-readable program instructions. The operating software of storage system 545 comprises virtual machine requirements process 524, resource availability process 525, and deploy process 526. The operating software on storage system 545 may further include an operating system, utilities, drivers, network interfaces, applications, or some other type of software. When read and executed by processing system 550 the operating software on storage system 545 directs management service computing system 500 to operate as a management service described herein in Figure 1-4.

In at least one implementation, virtual machine requirements process 524 directs processing system 550 to identify a request to deploy a virtual machine in a computing environment that comprises a plurality of hosts. The request can comprise a request to deploy a new virtual machine or to migrate a virtual machine from a first host to a second host in the plurality of hosts. In response to the request, virtual machine requirements process 524 directs processing system 550 to identify resource requirement information associated with the virtual machine, wherein the resource requirement information can correspond to SmartNIC requirements and main processing system requirements for the virtual machine. The requirements can be manually provided by an administrator, can be determined or estimated based on a workload or application associated with the virtual machine, can be determined or estimated from a previous deployment of the virtual machine, or can be determined in some other manner.

In addition to identifying the requirements for the virtual machine, resource availability process 525 directs processing system 550 to identify resource availability associated with the various SmartNICs on the hosts in the computing environment. The information can be reported from the hosts periodically, based on the request from management service computing system 500, or at some other interval. The resource availability information can indicate the availability of processing resources on each SmartNIC, memory resource availability on each SmartNIC, or some other resource information associated with the SmartNIC. Further, in some examples, resource availability process 525 can direct processing system 550 to identify the feature sets (or vendor) associated with each of the SmartNICs, wherein different SmartNICs can support different features that are required for the virtual machines. For example, a first SmartNIC can include hardware that supports the prioritization of packets based on information provided in the header of the packet, while a second SmartNIC can be incapable of supporting the packet prioritization operations via hardware.

Once the resource availability is identified for the SmartNICs in the computing environment along with the resource requirements for the virtual machine, deploy process 526 directs processing system 550 to select a host in the computing environment to support the virtual machine. After selection, deploy process 526 can initiate the deployment of the virtual machine, wherein the deployment can include allocating resources to the virtual machine, attaching one or more disks (virtual or physical) to the virtual machine, configuring network operations, or some other deployment operation associated with the virtual machine.

In some implementations, in addition to determining a host for the virtual machine based on the SmartNIC resources available and the SmartNIC requirements of the virtual machine, deploy process 526 can further use the main processing requirements of the virtual machine and the main processing resources available on the hosts in the computing environment. As described herein, a host can include a main processing system and one or more SmartNICs. The main processing system includes first hardware, such as one or more processors (CPUs) and memory that can execute the virtual machines and the hypervisor that supports the virtual machines. The one or more SmartNICs on a host can each include dedicated hardware that provides networking functionality, such as firewalls, routing, packet prioritization, and the like. In addition to the SmartNIC resource availability information, the hosts can provide information about the main processing system availability, including processing resources available, memory resources available, and the like. Accordingly, deploy process 526 can direct processing system 550 to select a host based on both the main processing system requirements of the virtual machine and the SmartNIC requirements of the virtual machine. In some examples, the main processing requirements can take precedent over the SmartNIC requirements of the virtual machine. In some examples, deploy process 526 can generate a score for each of the hosts based on the ability that each host can accommodate the requirements of the virtual machine. A host can then be selected that best supports the virtual machine requirements.

In some examples, multiple hosts can include the resources (SmartNIC or main processing system) to support the virtual machine. When this occurs, deploy process 526 can select a host at random, can select a host with the most available resources, can select a host with the minimum requisite resources, or can select a host by some other means. As an example, deploy process 526 can identify a set of three hosts capable of supporting the execution of a new virtual machine. Deploy process 526 can then select a first host for the virtual machine from the set based on the first host having the most resource headroom (i.e., the most available resources).

The included descriptions and figures depict specific implementations to teach those skilled in the art how to make and use the best mode. For teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

## Claims

1. A method comprising:
identifying a request to deploy a virtual machine in a computing environment;
identifying smart network interface connector (SmartNIC) resource requirement information associated with the virtual machine;
identifying resource availability information associated with SmartNICs on hosts in the computing environment; and
selecting a host from the hosts for the virtual machine based on the SmartNIC resource requirement information and the resource availability information.

2. The method of claim 1, wherein
identifying the SmartNIC resource requirement information comprises
estimating the SmartNIC resource requirement information based on a workload for the virtual machine.

3. The method of claim 1 or 2, wherein
the SmartNIC resource requirement information comprises
processing resource requirements and memory resource requirements.

4. The method of any one of the claims 1 to 3, further comprising:
identifying a feature set associated with each SmartNIC of the SmartNICs;
wherein selecting the host from the hosts for the virtual machine is further based on the feature sets associated with the SmartNICs.

5. The method of any one of the claims 1 to 4, wherein
resource availability information comprises
processor resource usage associated with each SmartNIC of the SmartNICs, and memory resource usage associated with each SmartNIC of the SmartNICs.

6. The method of any one of the claims 1 to 5, further comprising:
identifying resource availability information associated with a main processing system of each host of the hosts, wherein the main processing system comprises at least first processing hardware and memory on the host, and wherein the SmartNIC comprises second processing hardware on the host;
wherein selecting the host from the hosts for the virtual machine is further based on the resource availability information associated with the main processing systems of the hosts.

7. The method of any one of the claims 1 to 6, wherein
identifying the request to deploy the virtual machine in the computing environment comprises
identifying a request to migrate the virtual machine in the computing environment.

8. The method of any one of the claims 1 to 7, further comprising:
identifying a vendor associated with each SmartNIC of the SmartNICs;
wherein selecting the host from the hosts for the virtual machine is further based on the vendor associated with each SmartNIC of the SmartNIC.

9. A computing apparatus comprising:
a storage system;
a processing system operatively coupled to the storage system; and
program instructions stored on the storage system that, when executed by the processing system,
direct the computing apparatus to control and/or carry out a method as set forth in any one of the preceding claims.

10. A system comprising:
a plurality of hosts; and
a management service computer communicatively coupled to the plurality of hosts and
configured to:
identify a request to deploy a virtual machine in a computing environment;
identify smart network interface connector (SmartNIC) resource requirement information associated with the virtual machine;
obtain resource availability information associated with SmartNICs on hosts in the computing environment; and
select a host from the hosts for the virtual machine based on the SmartNIC resource requirement information and the resource availability information.

11. The system of claim 10, wherein
identifying the SmartNIC resource requirement information comprises
estimating the SmartNIC resource requirement information based on a workload for the virtual machine.

12. The system of claim 10 or 11, wherein
the management service computer is further configured to:
identify a feature set associated with each SmartNIC of the SmartNICs;
wherein selecting the host from the hosts for the virtual machine is further based on the feature sets associated with the SmartNICs.

13. The system of any one of the claims 10 to 12, wherein the management service computer is further configured to:
identify resource availability information associated with a main processing system of each host of the hosts, wherein the main processing system comprises at least first processing hardware and memory on the host, and wherein the SmartNIC comprises second processing hardware on the host;
wherein selecting the host from the hosts for the virtual machine is further based on the resource availability information associated with the main processing systems of the hosts.
